# EUROPÄISCHE PATENTANMELDUNG

(11) **EP 4 741 676 A1**
(43) Veröffentlichungstag der Anmeldung: **13.05.2026**
(21) Anmeldenummer: 25210725.5
(22) Anmeldetag: 23.10.2025
(51) Int. Cl.: F16C 35/067, F16C 35/06

(54) **VERFAHREN ZUR MONTAGE EINER WÄLZLAGERANORDNUNG EINER WELLE IN EINEM GEHÄUSE AUFWEISEND EINEN LAGERSITZ SOWIE PUMPVORRICHTUNG AUFWEISEND EINE DERART MONTIERTE WÄLZLAGERANORDNUNG**

(30) Priorität: 12.11.2024 DE 102024133013
(71) Anmelder: NIDEC GPM GmbH, 98673 Auengrund /OT Merbelsrod (DE)
(72) Erfinder: Nickel, Conrad, 99438 Troistedt (DE); Herrling, Luis, 96524 Föritztal (DE); Weinert, Heidemarie, 98646 Reurieth OT Siegritz (DE)
(74) Vertreter: Kuhnen & Wacker Patent- und Rechtsanwaltsbüro PartG mbB

(57) **Zusammenfassung**

Die Erfindung betrifft ein Verfahren zur Montage einer Wälzlageranordnung (1) einer Welle (2) in einem Lagersitz (20) für die Wälzlageranordnung (1), z.B. eines Gehäuses (21) mit wenigstens folgenden Schritten:
a) Anordnen von wenigstens zwei Wälzlagern (3A, 3B) auf der Welle (2);
b) Thermisches Aufweiten des Lagersitzes (20) durch Erwärmen wenigstens des Lagersitzes (20), z.B. des Gehäuses (21) auf einen Durchmesser (D_{LS}), der größer ist als der außen Durchmesser (D_{AR}) der Außenringe (6A, 6B) der Wälzlager (3A, 3B);
c) Einsetzen der Außenringe (6A, 6B) in den thermisch aufgeweiteten Lagersitz (20);
d) Axiales Vorspannen der Außenringe (6A, 6B) der Wälzlager (3A, 3B) relativ zueinander aufeinander zu oder voneinander weg wenigstens während eines dem Schritt a) nachgelagerten Zeitraumes, in dem der Außendurchmesser (D_{AR}) der Außenringe (6A, 6B) der Wälzlager (3A, 3B) kleiner oder gleich ist dem Durchmesser (D_{LS}) des Lagersitzes (20);
e) Abkühlen des Lagersitzes (20) zur Ausbildung eines Querpresssitzes zwischen den Außenringen (6A, 6B) der Wälzlager (3A, 3B) und dem Lagersitz (20), wobei der axial vorgespannte Zustand der Wälzlager (3A, 3B) zueinander fixiert wird.

Im zweiten Aspekt betrifft die Erfindung eine Pumpvorrichtung, welche eine Wälzlageranordnung besitzt, die nach dem erfindungsgemäßen Verfahren montiert wurde.

## Beschreibung

Die Erfindung betrifft ein Verfahren zur Montage einer Wälzlageranordnung einer Welle in einem Gehäuse aufweisend einen Lagersitz sowie in einem zweiten Aspekt eine Pumpvorrichtung aufweisend eine derart montierte Wälzlageranordnung.

Üblicherweise werden Rotorwellen von Rotoren von Elektromotoren von Pumpvorrichtungen mittels Gleit- oder Wälzlagerungen gelagert. Im Bereich der Wälzlagerungen sind Kompaktlager bekannt, welche als eine baulich einzige Lagereinheit eine Mehrzahl von Wälzlagern enthalten und somit eine mechanisch definierte Lagerung bereitstellen. Derartige Kompaktlager haben sich zwar bewährt, es ist allerdings notwendig, bei geringen Änderungen der Lagerungsgeometrie bereits eine relativ kostspielige Änderung am Kompaktlager vorzunehmen. Insbesondere wenn eine Vielzahl unterschiedlicher Pumpvorrichtungen zum Beispiel eine Pumpvorrichtungplattform mit geringfügig variierenden Lagersitzgeometrien auf Kundenwunsch spezifisch anzupassen ist, ist die Anpassung eines Kompaktlagers oftmals kostspielig und unrentabel.

Des Weiteren steigen insbesondere bei Fluidpumpen die Anforderungen an einen möglichst geräuschlosen Betrieb ständig an, die mit Wälzlageranordnung nach bisherigen Konstruktionsprinzipien nicht oder nur sehr schwer erreichbar sind. Außerdem ist der Pumpenwirkungsgrad einer Pumpvorrichtung reduziert, wenn die Pumpenwelle, welche das Pumpenrad trägt, einen undefinierten Vorspannungszustand mit geringfügigem Spiel hat. Ein solches Spiel erhöht die notwendigen Spaltmaße des Pumpenrotors innerhalb des Pumpengehäuses, was unerwünscht ist. Fluidpumpen werden in großen Stückzahlen hergestellt, sodass eine vereinfachte Montage, insbesondere eine toleranzunabhängige Montage wünschenswert ist. Zudem steigen die Anforderungen dahingehend an, die Gleichteile bzw. eine Standardisierung eines Lagersystems weiter zu steigern bzw. zu optimieren. Hierdurch kann eine ebenfalls wünschenswerte Lieferantenunabhängigkeit aufgrund der Möglichkeit einer Standard-Bauteilauswahl möglich werden.

Aufgabe der Erfindung ist es daher, ein Verfahren zur Montage einer Wälzlageranordnung anzugeben, welches die oben erwähnten steigenden Anforderungen adressieren und lösen kann. Des Weiteren ist es Aufgabe der Erfindung, ein Verfahren zur Montage einer Wälzlageranordnung anzugeben, welches die Nachteile des bekannten Standes der Technik überwinden, wenigstens jedoch reduzieren kann. Insbesondere soll ein geräuscharmer Lauf der Lagerung und ein definierter Lagerungszustand, insbesondere ein definierter Lagervorspannungszustand erreicht werden.

Diese Aufgaben werden mit einem Verfahren zu Montage einer Wälzlageranordnung einer Welle in einem Gehäuse aufweisend einen Lagersitz für die Wälzlageranordnung mit den Merkmalen des Anspruchs 1 gelöst. Ferner wird die Aufgabe mit einer Pumpvorrichtung mit den Merkmalen des Anspruchs 9 gelöst.

Ein erfindungsgemäßes Verfahren zur Montage einer Wälzlageranordnung einer Welle in einem Lagersitz für die Wälzlageranordnung, z.B. eines Gehäuses weist wenigstens folgende Schritte auf:
a) Anordnen von wenigstens zwei Wälzlagern auf der Welle;
b) Thermisches Aufweiten des Lagersitzes durch Erwärmen wenigstens des Lagersitzes, z.B. des Gehäuses auf einen Durchmesser (D_{LS}), der größer ist als der Außendurchmesser (D_{AR}) der Außenringe der Wälzlager;
c) Einsetzen der Außenringe in den thermisch aufgeweiteten Lagersitz;
d) Axiales Vorspannen der Außenringe der Wälzlager relativ zueinander in einer Längsrichtung der Welle gesehen aufeinander zu oder voneinander weg wenigstens während eines dem Schritt a) nachgelagerten Zeitraumes, in dem der Außendurchmesser (D_{AR}) der Außenringe der Wälzlager kleiner oder gleich ist dem Durchmesser (D_{LS}) des Lagersitzes;
e) Abkühlen des Lagersitzes zur Ausbildung eines Querpresssitzes zwischen den Außenringen der Wälzlager und dem Lagersitz, wobei der axial vorgespannte Zustand der Wälzlager zueinander fixiert wird.

Mit dem erfindungsgemäßen Verfahren gelingt es, mittels einfacher Montageschritte, insbesondere unter Vermeidung erheblicher Montagekräfte und unter Vermeidung von Justagearbeiten einen Vorspannungszustand zu erzeugen, der nach der Montage definiert erhalten bleibt und sich im Betrieb der Lagerung nicht oder nur in einem akzeptablen Maß, d. h. unwesentlich, ändert.

Das Fügen der Lagerung in ein nennthermisch aufgeweiteten Lager sitzt, welche einen größeren Lagersitzdurchmesser hat als der Durchmesser der Außenringe der Wälzlager ermöglicht ein nahezu kraftloses Einsetzen der die Lagerung tragende Welle in den Lagersitz. Zur Fixierung des vorgespannten Lagerzustandes dient der Querpresssitz, welcher sich ausbildet, wenn ein thermisch erweiterter Lagersitz sich durch Abkühlung an die Außenringe der Wälzlager angelegt und die Spielpassung während der Montage in eine Presspassung (Querpressverbund) übergeht. In diesem verpressten Zustand können sich die Außenringe der Lager zueinander nicht mehr bewegen, sodass der bei der Montage erreichte Verspannungszustand erhalten bleibt. Verspannungsmittel, zum Beispiel Federring oder dergleichen, die gegebenenfalls zur Erzeugung des Verspannungszustandes vor der Montage eingesetzt werden, können zwar nach der Ausbildung des Querpassverbundes in der Lagerung verbleiben, dies ist allerdings nicht zwingend notwendig. Ein weiterer Vorteil der erfindungsgemäßen Verfahrens ist, dass bei einer Vorspannung der Außenringe zweier auf der Welle sitzenden Wälzlager voneinander weg im Rahmen des zwar kleinen, aber doch vorhandenen Axialspiels eines Wälzlagers, zum Beispiel eines Rillenkugellagers das aus der Lagerung entfernt wird und somit eine tendenziell in O-Anordnung arbeitende Lagerung der beiden Welz-/Kugellager gebildet wird. Bei einer Verspannung der Außenringe aufeinander zu entsteht dementsprechend eine Lagerungsanordnung, die tendenziell einer X-Anordnung der Wälzlager zueinander entspricht.

Durch das erfindungsgemäße, insbesondere Axialspiel von Wälzlagern ausgleichende Montageverfahren können insbesondere kostengünstige Kugellager/Wälzlager Verwendung finden, ohne dass Qualitätseinbußen hinsichtlich der Genauigkeit der Lagerungsführung wie auch hinsichtlich der Geräusche und der zu erwartenden Reibungen auftreten. Insbesondere gelingt also dadurch eine qualitativ hochwertige Ausbildung einer Wellenlagerung bei geringem Kostenaufwand.

In einer besonderen Ausführungsform ist eine Temperatur (Tₘₒₙₜ), auf die der Lagersitz zum thermischen Aufweiten erhitzt wird, größer ist als eine maximal auftretende Betriebstemperatur (T_{B}) der Wälzlageranordnung und des Lagersitzes.

Hierdurch kann insbesondere ausgeschlossen werden, dass durch eine im Betrieb entstehende Erwärmung der gesamten Lagerung, d. h. der Wälzlager und des Lagersitzes ein Lösen des Querpresseverbandes verhindert wird. Insbesondere bei unterschiedlichen Wärmedehnungen eines Materials des Lagersitzes und eines Materials der Kugellager/der Welle ist selbst verständlich zweckmäßigerweise die Montagetemperatur Tₘₒₙₜ mindestens derart hoch gewählt, dass auch bei auftretenden betriebsbedingten Materialdehnung in der Querpressverbund zwischen den Lagern und dem Lagersitz nicht gelöst wird.

In der Längsrichtung bei der Welle gesehen kann beispielsweise ein Lagersitz aus Aluminium, welcher eine höhere Wärmedehnung hat als eine Stahlwelle bei steigender Betriebstemperatur und aufrechterhaltenem Querpassverbund dafür sorgen, dass die axiale Vorspannung der Außenringe der Wälzlager zueinander, sofern sie derart ausgerichtet ist, dass sie voneinander Weg weist, noch verstärken, da die Längenausdehnung des Lagersitzes aus Aluminium größer ist als die Längenausdehnung der Welle. Bei der Auswahl eines Materiales mit nur sehr geringfügig unterschiedlichen Wärmedehnungen für die Ausbildung des Lagersitzes, die Ausbildung der Welle und der Ausbildung der Lager Außenringe, ist dieser Effekt vernachlässigbar.

Bei einer weiteren Ausführungsform der Erfindung kann es vorteilhaft sein, dass das axiale Vorspannen der Außenringe zueinander mittels eines Druckfederelements, z.B. eines Wellfederrings, einer Tellerfeder oder einem elastisch deformierbaren Polymerelement, zwischen den Außenringen bewirkt wird.

Hierdurch kann beispielsweise ein bereits mit vorgespannten Außenringen versehene Vormontageverbund V aus der Welle und den Wälzlagern gebildet werden, welcher nach dem Aufheizen des Lagersitzes ohne wesentliche Montagekräfte nur noch in den Lagersitz eingesetzt werden muss. Auch stellt diese Maßnahme eine einfache Maßnahme dar, die gegebenenfalls gewünschte O-Anordnung der Wälzlager zueinander herzustellen.

Weiterhin kann es vorteilhaft sein, dass das axiale Vorspannen der Außenringe zueinander mittels eines Magnets bewirkt wird, welcher wenigstens bis zur Ausbildung eines ausreichend festen Querpressverbands zwischen den Außenringen und dem Lagersitz auf die Außenringe einwirkt.

Das Vorspannen der Außenringe zueinander mittels eines Magnets hat den besonderen Vorteil, dass der Magnet als Montagehilfe ausgebildet sein kann, welcher nach der Montage, d. h. nach dem Ausbilden des Querpressverbundes (nach dem Abkühlen des Lagersitzes) wieder entfernt werden kann und nicht in der Lagerungsanordnung verbleibt. Hierdurch gelingt es, beispielsweise im Vergleich zu der alt oben angegebenen alternativen Lösung mit Federring oder dergleichen Gewicht der Lagerung einzusparen. Auch ist während der Montage des Lagerungsverbundes die Handhabung von deutlich weniger Einzelteilen erforderlich.

Zweckmäßig ist, dass zur axialen Vorspannung die Außenringe in Längsrichtung L der Welle gesehen aufeinander zu oder voneinander weg die Außenringe federnd oder magnetisch vorgespannt werden.

Bei einer Vorspannung der Außenringe aufeinander zu entsteht eine X-Anordnung der Wälzlager zueinander, welche insbesondere bei relativ weit auseinanderstehenden Wälzlagern in Wellenlängsrichtung gesehen vorteilhaft sein kann um Kräfte, die zwischen den Wälzlagern in die Welle eingeleitet werden, abzustützen.

Andererseits kann bei einer Vorspannung der Außenringe der beiden Wälzlager in Längsrichtung der Welle gesehen voneinander weg in einfacher Art und Weise eine O-Anordnung der Wälzlager zueinander erreicht werden.

Für einige Anwendungen, bei denen es auf eine besonders platzsparende Konstruktion der Wellenlagerung ankommt, ist es vorteilhaft, dass die Welle selbst Laufbahnen für Wälzkörper besitzt und somit einen Innenring der Wälzlager bildet.

Hierdurch können separate Innenringe der Wälzlager eingespart werden.

Für das erfindungsgemäße Verfahren zweckmäßige Bauarten der Wälzlager sind Rillenkugellager, Schulterkugellager, Schrägkugellager oder Kegelrollenlager. Diese können neben den Radialkräften wenigstens in einer Axialrichtung vorgespannt werden und eignen sich somit für das erfindungsgemäße Verfahren.

Eine besonders kostengünstige Ausbildung der Wälzlageranordnung sieht vor, dass die Wälzlageranordnung aus wenigstens zwei Wälzlagern gleicher Bauart besteht, was Kostenvorteile bringt. Sie kann alternativ auch wenigstens aus zwei Wälzlagern unterschiedlicher Bauart ausgebildet werden, was zum Beispiel eine Berücksichtigung von in lediglich eine Richtung auftretenden hohen Axialkräfte durch geeignete Lagerwahl ermöglicht.

Pumpenvorrichtung, welche wenigstens eine bezüglich eines Gehäuses drehbar gelagerte Rotorwelle besitzt, wobei eine Wälzlageranordnung der Rotorwelle hergestellt nach einem Verfahren nach einem der Ansprüche 1 bis 8 montiert ist.

Im Folgenden wird die Erfindung anhand der Zeichnung beispielhaft näher erläutert es zeigen:
- Figur 1A, 1B:: schematisch einen Vormontageverbund zur Durchführung des erfindungsgemäßen Montageverfahrens aus einer Welle und 3
- Figur 2A, 2B, 2C, 2D:: Wälzlagern, deren Außenringe federnd voneinander weg in Längsrichtung der Welle gesehen vorgespannt sind; schematisch einen Montageablauf des erfindungsgemäßen Montageverfahrens am Beispiel einer Montage eines vom montierten Lager-/Wellenverbundes in einem Gehäuse einer Pumpvorrichtung:
- Figur 3:: schematisch ein Beispiel eines Montageschrittes des erfindungsgemäßen Montageverfahrens mit einem Vormontageverbund mit nicht vorgespannten Lageraußenringen, bei dem die Vorspannung der Lageraußenringe erst während bzw. nach dem Einsetzen des vor Vormontageverbundes im Lagersitz mittels eines mechanischen Federelements erfolgt;
- Figur 4:: schematisch ein Beispiel eines Montageschrittes des erfindungsgemäßen Montageverfahrens mit nicht vorgespannten Außenringen, bei dem die Vorspannung der Außenringe erst während bzw. nach dem Einsetzen des Vormontageverbundes im Lagersitze mittels Magnet erfolgt;
- Figur 5:: schematisch ein Montageergebnis des erfindungsgemäßen Montageverfahrens mit in Längsrichtung L der Welle gesehen aufeinander zu vorgespannten Außenringen;
- Figur 6:: schematisch ein Montageergebnis des erfindungsgemäßen Montageverfahrens mit in Längsrichtung der Welle gesehen voneinander weg vorgespannten Außenringen;
- Figur 7:: schematisch den Ablauf des erfindungsgemäßen Montageverfahrens anhand eines Blockdiagramms.

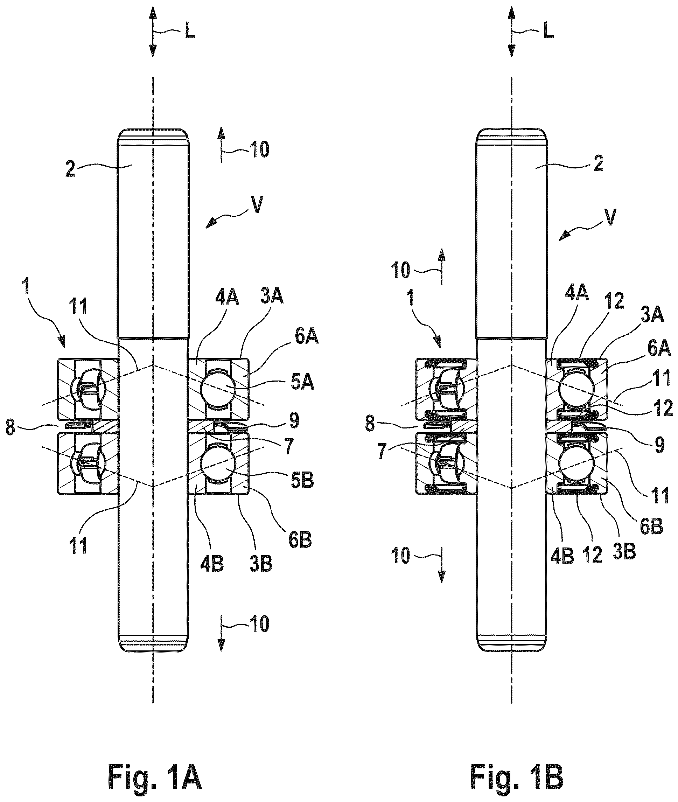

Bei einem erfindungsgemäßen Verfahren zur Montage einer Wälzlageranordnung 1 einer Welle 2 ist in einem Schritt a) zunächst vorgesehen, wenigstens 2 Wälzlager 3A, 3B auf einem zur Aufnahme der Lager vorgesehenen Bereich der Welle 2 in Längsrichtung L der Welle 2 aufeinanderfolgend anzuordnen. Eine solche Anordnung kann zum Beispiel mittels eines üblichen Klemm- oder Presssitzes von Innenringen 4A, 4B der Wälzlager 3A, 3B auf der Welle 2 erfolgen. Im Beispiel gemäß der Figuren 1A, 1B ist der gewählte Wälzlager-Typ für die Wälzlager 3A, 3B ein sogenanntes einreihiges Rillenkugellager mit Kugeln 5A, 5B als Wälzkörper, welche in bekannter Art und Weise in Laufrillen der Innenringe 4A, 4B und in Außenringen 6A, 6B laufen.

In Längsrichtung L gesehen sind die Innenringe 4A, 4B der beiden Wälzlager 3A, 3B mittels eines Distanzringes 7 beabstandet zueinander angeordnet. Eine Dicke des Distanzrings 7 bestimmt dabei das Abstandsmaß eines Spaltes 8 zwischen den beiden Wälzlagern 3A, 3B.

Im Spalt 8 zwischen den Außenringen 6A, 6B der Wälzlager 3A, 3B, den Distanzring 7 außenumfänglich umgebend sitzt ein Druckfederelement 9, welches vorgespannt an den Außenringen 3A, 3B anliegt und diese in Längsrichtung L gesehen voneinander weg auseinanderdrückt (siehe entgegengesetzte Pfeile 10). Mit fest auf der Welle 2 angeordneten Innenringen 4A, 4B ergibt sich somit durch das Vorspannen der Außenringe 6A, 6B voneinander weg in einem ersten Effekt zunächst eine Eliminierung eines eventuell vorhandenen Axialspiels innerhalb der Wälzlager 3A, 3B, weil jeder Außenring 6A, 6B gegenüber dem korrespondierenden Innenring 4A, 4B sich an den Wälzkörpern 5A, 5B (z.B. an Kugeln der Wälzlager 3A, 3B) abstützt. Hierdurch entsteht bezüglich der Welle 2 eine Wälzlageranordnung 1 in sogenannter O-Anordnung 11. Eine so gebildete Wälzlageranordnung 1 auf der Welle 2 läuft zum einen in Längsrichtung L (Axialrichtung) spielfrei und zum anderen besonders geräuscharm.

Die Welle 2 und wenigstens die Wälzlager 3A, 3B, ggfs. inklusive den Distanzring 7 und das Druckfederelement 9 bilden einen Vormontageverbund V.

Die Lagerungsanordnungen gemäß der Figuren 1A und 1B sind grundsätzlich von identischem Aufbau, wobei lediglich die Wälzlager 3A, 3B in der Ausführungsform gemäß Figur 1A als offene, d. h. nicht abgedichtete Wälzlager 3A, 3B ausgebildet sind und somit beispielsweise für eine Durchströmung mit Fluid, wie es beispielsweise in einer Pumpenanwendung erstrebenswert sein kann, geeignet sind. Demgegenüber sind die Wälzlager 3A, 3B in der Ausführungsform gemäß Figur 1A als abgedichtete Wälzlager 3A, 3B ausgebildet, welche in üblicher Art und Weise Dichtscheiben 12 aufweisen. Derartige Wälzlager 3A, 3B sind als abgedichtete, gegebenenfalls mit einem Schmierstoff dauergeschmierte Wälzlager 3A, 3B bekannt.

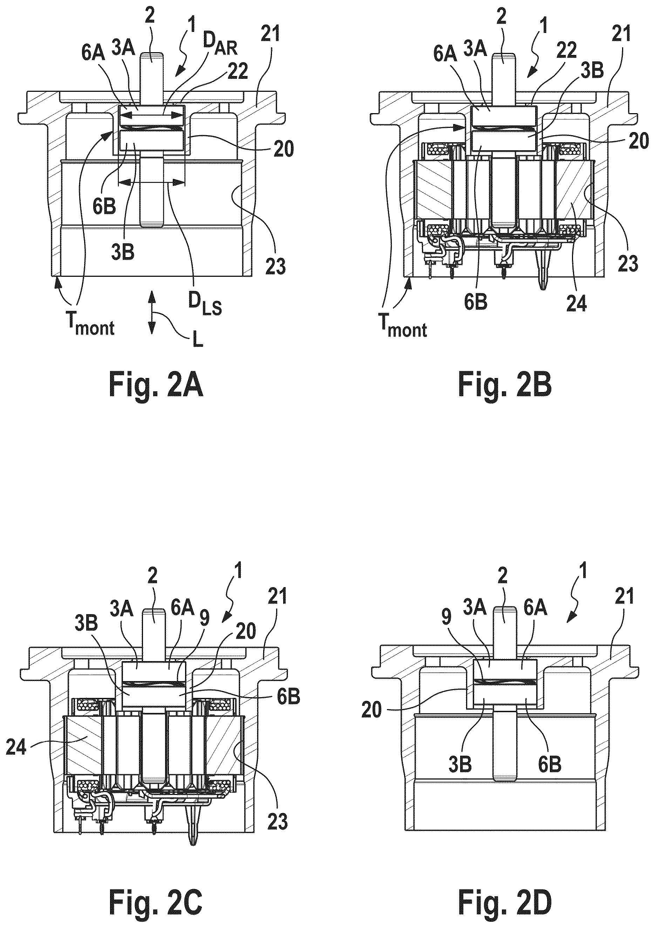

In einem weiteren Schritt (vergleiche auch Figuren 2A bis 2D) des erfindungsgemäßen Montageverfahrens wird ein Lagersitz 20, welcher zum Beispiel in einem Pumpengehäuse 21 vorhanden ist, thermisch aufgeweitet. Dies geschieht durch Erwärmen wenigstens des Lagersitzes 20 des Gehäuses 21 auf einen Innendurchmesser D_{LS}, welcher gleich oder größer ist als ein Außendurchmesser D_{AR} der Außenringe 6A, 6B der Wälzlager 3A, 3B. Die Wälzlageranordnung 1 auf der Welle 2, d.h. der Vormontageverbund V wird bevorzugt nicht erwärmt oder verbleibt jedenfalls auf einer gegenüber einer Montagetemperatur Tₘₒₙₜ, welche für eine thermische Aufweitung des Lagersitzes 20 auf ein Maß D_{LS} notwendig ist, deutlich niedrigeren Temperatur. Dies gewährleistet, dass durch das thermische Aufweiten des Lagersitzes 20 zuverlässig erreicht wird, dass der Innendurchmesser D_{LS} gleich oder größer ist als der Außendurchmesser D_{AR}. Dies ist in den Figuren 2A, 2B zeichnerisch dadurch dargestellt, dass zwischen den Außenringen 6A, 6B der Wälzlager 3A, 3B und einer Innenseite des Lagersitzes 20 eine kleine radiale Lücke zeichnerisch dargestellt ist. In der zeichnerischen Darstellung gemäß Figuren 2C und 2D ist dies nicht der Fall. Die Außenkonturen der Außenringe 6A, 6B fallen zeichnerisch mit der Innenkontur des Lagersitzes 20 zusammen. Dieser zeichnerische Unterschied zwischen den Figuren 2A, 2B und den Figuren 2C und 2D ist gewollt und soll das Vorliegen eines Radialspiels der Wälzlager 3A, 3B im aufgewärmten Zustand des Lagersitzes 20 bzw. des Gehäuses 21 auch zeichnerisch verdeutlichen.

Ist dieser Zustand erreicht, kann der Vormontageverbund V aus der Welle 2 und den Wälzlagern 3A, 3B inklusive eventuell vorhandener Distanzringe 7 und Druckfederelemente 9 in Längsrichtung L der Welle, d. h. in Axialrichtung ohne Kraftaufwand und bevorzugt ohne Berührung zwischen den Außenseiten der Außenringe 6A, 6B und einer Innenseite des Lagersitzes 20 in den Lagersitz 20 eingesetzt werden. In diesem Zustand sind die Außenringe 6A, 6B der Wälzlager 3A, 3B mittels des Druckfederelements 9 wie vorgeschrieben in Axialrichtung (Längsrichtung L) der Welle 2 voneinander weg vorgespannt. Da der Innendurchmesser D_{LS} größer oder wenigstens gleich ist zum Außendurchmesser D AR wird beim Einsetzen des Vormontageverbundes V in Axialrichtung keine Kraft auf die Außenringe 6A, 6B durch Kontakt mit dem Lagersitz 20 ausgeübt. Das Einsetzen des Vormontageverbundes V erfolgt beispielsweise bis zu einem bodenseitigen Anschlag 22 des Lagersitzes 20.

Im Ausführungsbeispiel gemäß der Figuren 2A bis 2D ist der Lagersitz 20 - wie vorgeschrieben - Teil eines Pumpengehäuses 21, wobei das Pumpengehäuse 21 im vorliegenden Fall bevorzugt als Ganzes auf die Montagetemperatur Tmont erhitzt wird, wodurch sich auch eine Sitzfläche 23 für einen Stator 24 eines Elektromotors aufgeweitet wird. Vor, nach oder zeitgleich mit dem Einsetzen des Vormontageverbundes V kann ebenso der Stator 24 in Axialrichtung bezüglich seiner Sitzfläche 23 im Gehäuse 21 positioniert werden. Diese Vorgehensweise ist insbesondere für die Montage einer Pumpeneinheit besonders vorteilhaft.

Im Anschluss an den vorbeschriebenen Schritt wird nunmehr wenigstens der Lagersitz 20, bevorzugt das gesamte Gehäuse 21 abgekühlt, wodurch sich der durch das thermische Aufweiten vergrößerte Innendurchmesser DLS des Lagersitzes 20 zur Ausbildung eines Querpresssitzes zwischen den Außenringen 6A, 6B der Wälzlager 3A, 3B und dem Lagersitz 20 verkleinert. Die Bemessung der entsprechenden Geometrien des Lagersitzes 20 im Verhältnis zum Außendurchmesser D_{AR} der Außenringe 6A, 6B der Wälzlager 3A, 3B im Kaltzustand derart, dass sich ein Querpresssitz in ausreichender Passungsüberlappung ausbildet, liegt im Bereich des fachmännischen Könnens und ist im Wesentlichen natürlich von der Größe des Außendurchmessers D_{AR} der Außenringe 6A, 6B der Wälzlager 3A, 3B abhängig. Durch das Abkühlen des Lagersitzes 20 entsteht ein Zustand gemäß Figur 2C, wobei die Außenringe 6A, 6B der Wälzlager 3A, 3B in ihrem axial vorgespannten Zustand zueinander durch den Querpresssitz fixiert werden und dieser axial vorgespannte Zustand somit auch nach dem Abkühlen des Lagersitzes 20 durch Reibung zwischen den Außenringen 6A, 6B und dem Lagersitz 20 aufrechterhalten bleibt. Im Beispiel gemäß Figur 2C ist anhand einer Pumpvorrichtung zudem nach dem Abkühlen des gesamten Gehäuses 21 nunmehr auch der Stator 24 mittels eines Querpresssitzes bezüglich seiner Sitzfläche 23 festgelegt.

Im vorgeschriebenen abgekühlten Zustand, bei dem die axiale Vorspannung der Wälzlager 3A, 3B zueinander durch die Ausbildung des Querpresssitzes innerhalb des Lagersitzes 20 wie vorgeschrieben fixiert ist, ist die Funktion des Druckfederelements 9, der sich noch aus der Phase vor der Montage dort befindet eigentlich überflüssig. Dieser kann jedoch sinnvoll nicht mehr entfernt werden und kann somit in dem Spalt 8 zwischen den Wälzlagern 3A, 3B verbleiben. Im Ergebnis liegt aber nunmehr ein axial vorgespannter Zustand der Außenringe 6A, 6B zueinander vor, welcher auch in einem Betrieb zum Beispiel der Pumpenvorrichtung 21 bei einer erhöhten Betriebstemperatur T_{B} erhalten bleibt und somit für eine zuverlässige, spielfrei und geräuscharm laufende Lagerung sorgt, welche erfindungsgemäß insbesondere durch Standardbauteile wie zum Beispiel einfache Rillenkugellager hergestellt werden kann.

Figur 2 D zeigt den Zustand gemäß Figur 2C, jedoch ohne Darstellung des Stators 24.

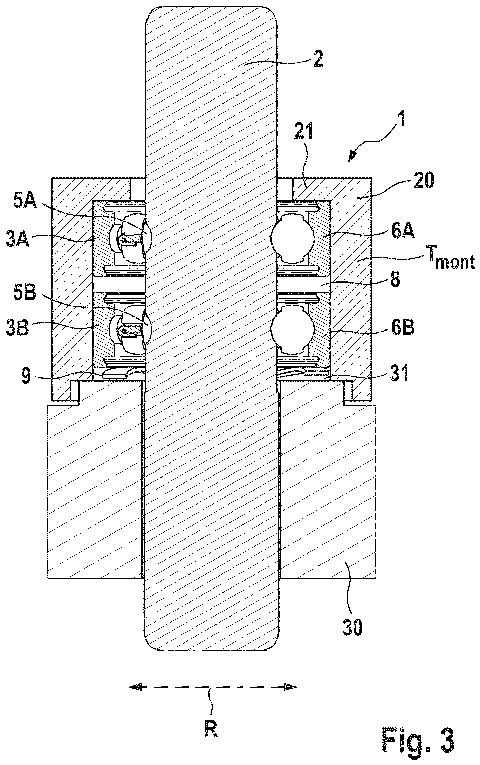

In Figur 3 ist der Montageschritt c) des Einsetzens der Außenringe 6A, 6B in den Lagersitz 20 mit seinem Axialanschlag 21 gezeigt. Es handelt sich um eine vereinfachte Darstellung ohne das vorbeschriebene Pumpengehäuse 21, ist jedoch auch auf eine Montagesituation gemäß der vorgeschriebenen Figuren 2A bis 2D übertragbar. Zur Klarstellung, obwohl keine radialen Spalte gezeichnet sind, sei angemerkt, dass sich der Lagersitz 20 in der Darstellung gemäß Figur 3 auf der Montagetemperatur Tₘₒₙₜ befindet. Mittels eines Montagewerkzeugstempels 30, der an seiner Stirnseite 31 das Druckfederelement 9 trägt, wird beim Einsetzen des Vormontageverbundes V durch das Druckfederelement 9, der sich auf der Stirnseite 31 des Montagestempels 30 einerseits und am Außenring 6B andererseits abstützt, eine Druckkraft auf den Außenring 6B in Richtung auf den Außenring 6A zu ausgeübt. Der Außenring 6A stützt sich axial an dem Anschlag 21 ab, wodurch im Ergebnis eine Vorspannung der Außenringe 6A, 6B aufeinander zu bewirkt wird. Diese Vorspannung über den Montagestempel 30 und das Druckfederelement 9 wird so lange aufrechterhalten, bis der Lagersitz 20 ausreichend abgekühlt ist und der Querpresssitz zwischen den Lageraußenringen 6A, 6B und der Innenseite des Lagersitzes 20 ausgebildet ist.

Bei dieser Ausführungsform ist von Vorteil, dass das Druckfederelement 9 nicht eingesperrt zwischen den Außenringen 6A, 6B verbleibt und nach der Montage zusammen mit dem Montagestempel 30 entfernt werden kann. Somit verbleibt in der fertigen Wälzlageranordnung 1 kein Druckfederelement 9, was zu einer zusätzlichen Gewichtserleichterung und insbesondere in der Massenfertigung zu einer Bauteileinsparung führt. Des Weiteren unterscheidet sich die dargestellte Montagesituation gemäß Figur 3 von den Vorbeschriebenen dadurch, dass die Welle 2 selbst die Laufbahnen für die Kugeln 5 zur Verfügung stellt, sodass die dargestellten Wälzlager 3A, 3B keine Innenringe 4A, 4B aufweisen. Auch dies trägt insbesondere zu einer in Radialrichtung R platzsparenden Bauweise bei und erspart zudem Material und Gewicht. Bei der in Figur 3 dargestellten Vorgehensweise handelt es sich um eine Vorgehensweise, bei der die Vorspannung der Außenringe 6A, 6B der Wälzlager 3A, 3B erst im Moment des Einsetzens der Außenringe 6A, 6B in den thermische aufgeweiteten Lagersitz 20 erfolgt, weil erst in diesem Zustand der Montagestempel 30 über das Druckfederelement 9 eine axiale Kraft auf den Außenring 6B des Wälzlagers 3B ausübt. Hierdurch soll verdeutlicht werden, dass es nicht zwingend erforderlich ist, bereits im Vormontageverbund V für eine axiale Vorspannung der Außenringe 6A, 6B zueinander zu sorgen. Dies kann auch erst während des Schrittes c) des erfindungsgemäßen Montageverfahrens erfolgen.

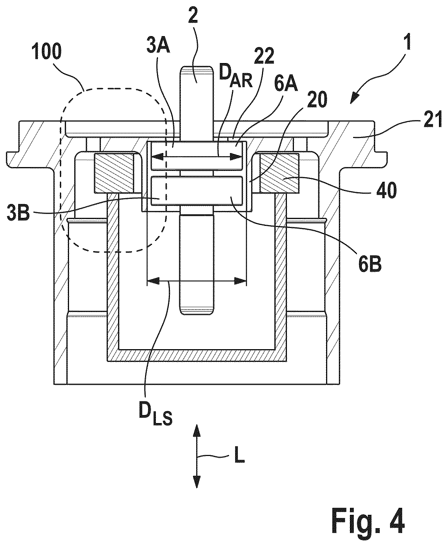

Bei der Ausführungsform gemäß Figur 4 handelt es sich um eine abgewandelte Art der Aufbringung des axialen Vorspannens der Außenringe 6A, 6B zueinander. Der Vormontageverbund V ist während des Einsetzens, insbesondere kurz vor dem Einsetzen der Außenringe 6A, 6B in den thermisch aufgeweiteten Lagersitz 20 (Schritt c) des erfindungsgemäßen Verfahrens) zueinander in Axialrichtung bzw. in Längsrichtung L der Welle 2 nicht aktiv vorgespannt. Dies geschieht erst nach dem Einsetzen der Außenringe 6A, 6B in den thermisch aufgeweiteten Lagersitz 20 mittels eines Ringmagnets 40, welcher außenseitig über den Lagersitz 20, insbesondere diesen umgreifend angeordnet wird. Der Ringmagnet 40 ist beispielsweise ein Dauermagnet oder ein Elektromagnet, welcher durch den Verlauf der Feldlinien für eine axiale Vorspannung der in Axialrichtung in diesem Zustand im Rahmen der Lagerspiele noch frei beweglichen Außenringe 6A, 6B sorgt. Im dargestellten Beispiel gemäß Figur 4 sorgen die Magnetfeldlinien 100 dafür, dass die Außenringe 6A, 6B magnetisch aufeinander zu vorgespannt werden. Eine gestrichelte Linie 100, dargestellt in Figur 4, soll schematisch und stark vereinfacht den Verlauf einer Magnetfeldlinie des Ringmagneten 40 zeigen. Selbstverständlich sind auch andere Bauarten als die Bauart eines Ringmagneten 40 geeignet. Wesentlich ist, dass ein Magnetfeld, sei es dauerhaft vorhanden oder ein- und ausschaltbar, derart angelegt wird, dass ein axiales Vorspannen der Außenringe 6A, 6B zueinander stattfindet bevor durch Abkühlen des Lagersitzes 20 gemäß Schritt e) des erfindungsgemäßen Verfahrens ein Querpresssitz zumindest in dem Maße ausgebildet ist, das ein Verlust der axialen Vorspannung der Außenringe 6A, 6B verloren geht oder vermindert wird.

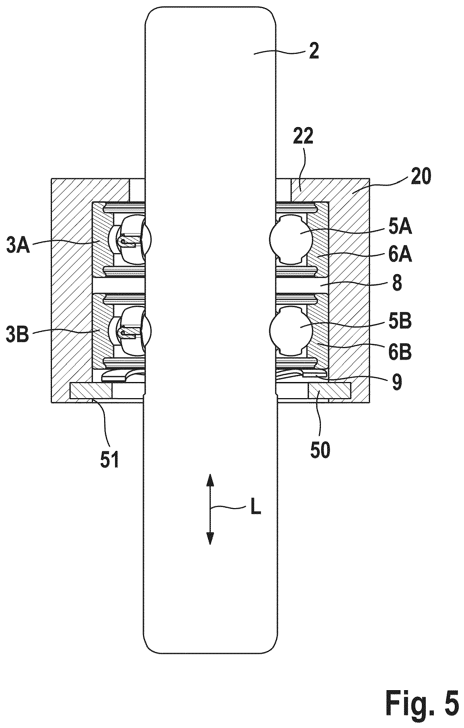

Figur 5 zeigt eine weitere Möglichkeit der axialen Vorspannung von Außenringen 6A, 6B der Wälzlager 3A, 3B, wobei das Druckfederelement 9 nicht in dem Spalt 8 zwischen den Wälzlager 3A, 3B angeordnet ist, sondern axial gegenüberliegend zum Anschlag 22 des Lagersitzes 20 gegen den Außenring des Wälzlagers 3B drückend angeordnet ist. Zur Aufrechterhaltung der axialen Krafteinwirkung des Druckfederelements 9 auf den Außenring 6B hin zum Außenring 6A, der sich seinerseits am Anschlag 22 axial abstützt, kann die Montage eines Sicherungsringes 50 vorgesehen sein, welcher in einer Sicherungsringsnut 51 im Lagersitz 20 eingelassen ist. Mit der Anordnung gemäß Figur 5 wird somit eine axiale Vorspannung der Außenringe 6A, 6B aufeinander zu verwirklicht, die dann bei ausgebildetem Querpresssitz nach dem Abkühlen gemäß Schritt e) des erfindungsgemäßen Verfahrens fixiert ist. Die Darstellung gemäß Figur 5 zeigt ebenso eine Anordnung der Wälzlager 3A, 3B ohne Innenringe 4A, 4B. Die Laufrillen für die Wälzkörper 5 sind wie im Zusammenhang mit Figur 3 vorbeschrieben, in die Wellenoberfläche eingearbeitet. Hierdurch ist der Axialabstand der Wälzlager 3A, 3B zueinander ebenfalls vorgegeben, sodass wie auch in der Ausführungsform gemäß Figur 3 zur Ausbildung des Spaltes 8 kein Distanzring 7, wie er in den Figuren 1A, 1B dargestellt ist, notwendig ist.

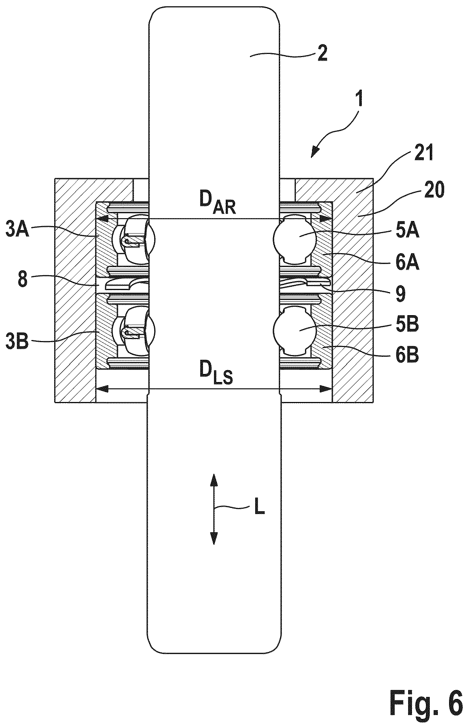

Im Unterschied zur Figur 5 zeigt Figur 6 eine erfindungsgemäß montierte Wälzlageranordnung 1, bei der das Druckfederelement 9 ohne das Vorsehen eines Distanzrings 7 im Spalt 8 zwischen den Wälzlagern 3A, 3B auf die Außenringe 6A, 6B federnd drückend einwirkend angeordnet ist. Die Außenringe 6A, 6B werden somit voneinander weg vorgespannt. Die Ausführungsform gemäß Figur 6 zeigt zudem, dass bei abgekühltem Lagersitz 20, d. h. bei ausgebildeten Querpresssitz der Außenringe 6A, 6B im Lagersitz 20 ein Sicherungsring 50, wie er im Zusammenhang mit Figur 5 dargestellt ist, auch entbehrlich sein kann. Im abgekühlten Zustand des Lagersitzes 20 nach dem Schritt e) des erfindungsgemäßen Verfahrens sind die Außenringe 6A, 6B der Wälzlager 3A, 3B in Längsrichtung L der Welle 2, d. h. in Axialrichtung, bezüglich des Lagersitzes 20 fixiert, sodass vergleichbar wie in den Situationen gemäß der Figuren 1A und 1B das Druckfederelement 9 zur Aufrechterhaltung der axialen Vorspannung nicht mehr notwendig ist. Er kann aber ohne weiteres im Spalt 8 verbleiben.

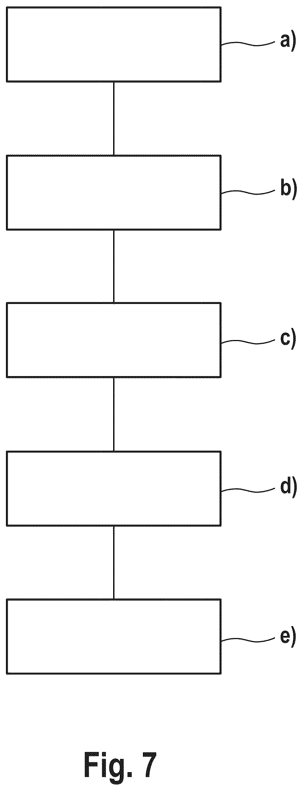

Figur 7 zeigt schematisiert den Ablauf des erfindungsgemäßen Montageverfahrens anhand eines Blockdiagramms. Zunächst werden gemäß Schritt a) des erfindungsgemäßen Verfahrens wenigstens zwei Wälzlager 3A, 3B auf der Welle 2 angeordnet. In einem weiteren Schritt b) erfolgt ein thermisches Aufweiten des Lagersitzes 20 durch Erwärmen wenigstens des Lagersitzes 20 des Gehäuses 21. Das Erwärmen erfolgt dabei derart, dass der Lagersitz einen Innendurchmesser D_{LS} bei der Montagetemperatur Tmont erreicht, wobei der Innendurchmesser D_{LS} größer ist als ein Außendurchmesser D_{AR} der Außenringe 6A, 6B der Wälzlager 3A, 3B, sodass diese mit Spiel oder gerade spielfrei, jedenfalls unter Vermeidung wesentlicher Axialkräfte in den thermische aufgeweiteten Lagersitz 20 eingesetzt werden können (Schritt c)).

In einem weiteren Schritt d) erfolgt ein axiales Vorspannen der Außenringe 6A, 6B der Wälzlager 3A, 3B relativ zueinander in einer Längsrichtung L der Welle 2. Das axiale Vorspannen der Außenringe 6A, 6B erfolgt dabei entweder aufeinander zu oder voneinander weg. Der Schritt d) wird zeitlich jedenfalls nach dem Schritt a) durchgeführt und kann zeitlich gesehen vor oder während des Schrittes b), vor oder während des Schrittes c), jedenfalls vor der Ausbildung der Querpresssitzes zwischen den Außenringen 6A, 6B der Wälzlager 3A, 3B und dem Lagersitz 20 erfolgen. Die im Schritt d) erfolgte Vorspannung der Außenringe 6A, 6B aufeinander zu oder voneinander weg wird dabei zeitlich wenigstens derart lange aufrechterhalten, bis durch Abkühlen des Lagersitzes 20 die Ausbildung eines Querpressesitzes zwischen den Außenringen 6A, 6B der Wälzlager 3A, 3B und dem Lagersitz 20 ein derartig großes Maß erreicht hat, dass die Außenringe 6A, 6B der Wälzlager 3A, 3B in ihrer axialen Lage zueinander fixiert sind. Danach kann bei Bedarf das axiale Vorspannen, welches zur Vorbereitung der Montage vor der Ausbildung der Querpresssitzes gedient hat, wieder aufgelöst werden. Die gewollte bleibende axiale Vorspannung wird nach Ausbilden der Querpresssitze durch diese aufrechterhalten.

Mit dem erfindungsgemäßen Verfahren ist es in besonders einfacher Art und Weise unter Verwendung von Standardbauteilen möglich, eine geräuscharme und zumindest axial spielfreie Wälzlagerung einer Welle bereitzustellen, wobei das Montageverfahren der Wälzlagerung insbesondere für die Massenherstellung tauglich ist. Eine hierdurch erreichte Wälzlagerung zeichnet sich gemäß der Erfindung insbesondere durch ein besonders niedriges Gewicht, durch Langlebigkeit und durch geringen Bedarf an Einzelteilen aus.
- 1: Wälzlageranordnung
- 2: Welle
- 3A, 3B: Wälzlager
- 4A, 4B: Innenringe
- 5A, 5B: Wälzkörper, Kugel
- 6A, 6B: Außenringe
- 7: Distanzring
- 8: Spalt
- 9: Druckfederelement
- 10: entgegengerichtete Pfeile
- 11: O-Anordnung
- 12: Dichtscheiben
- 20: Lagersitz
- 21: Gehäuse
- 22: Anschlag
- 23: Sitzfläche
- 30: Montagestempel
- 31: Stirnseite
- 40: Magnet
- 50: Sicherungsring
- 51: Sicherungsringnut
- 100: Magnetfeldlinie

- V: Vormontageverbund
- L: Längsrichtung
- R: Radialrichtung
- D_{LS}: Innendurchmesser
- D_{AR}: Außendurchmesser des Außenrings
- Tₘₒₙₜ: Temperatur
- T_{B}: maximal auftretende Betriebstemperatur

## Patentansprüche

1. Verfahren zur Montage einer Wälzlageranordnung (1) einer Welle (2) in einem Lagersitz (20) für die Wälzlageranordnung (1), zum Beispiel eines Gehäuses (21) mit wenigstens folgenden Schritten:
a) Anordnen von wenigstens zwei Wälzlagern (3A, 3B) auf der Welle (2);
b) Thermisches Aufweiten des Lagersitzes (20) durch Erwärmen wenigstens des Lagersitzes (20) des Gehäuses (21) auf einen Innendurchmesser (D_{LS}), der größer ist als der Außendurchmesser (D_{AR}) der Außenringe (6A, 6B) der Wälzlager (3A, 3B);
c) Einsetzen der Außenringe (6A, 6B) in den thermisch aufgeweiteten Lagersitz (20);
d) Axiales Vorspannen der Außenringe (6A, 6B) der Wälzlager (3A, 3B) relativ zueinander in einer Längsrichtung (L) der Welle (2) gesehen aufeinander zu oder voneinander weg wenigstens während eines dem Schritt a) nachgelagerten Zeitraumes, in dem der Außendurchmesser (D_{AR}) der Außenringe (6A, 6B) der Wälzlager (3A, 3B) kleiner oder gleich ist dem Innendurchmesser (D_{LS}) des Lagersitzes (20);
e) Abkühlen wenigstens des Lagersitzes (20) zur Ausbildung eines Querpresssitzes zwischen den Außenringen (6A, 6B) der Wälzlager (3A, 3B) und dem Lagersitz (20), wobei der axial vorgespannte Zustand der Wälzlager (3A, 3B) zueinander fixiert wird.

2. Verfahren nach Anspruch 1, **dadurch gekennzeichnet, dass** eine Temperatur (Tₘₒₙₜ), auf die der Lagersitz (20) zum thermischen Aufweiten erhitzt wird, größer ist als eine maximal auftretende Betriebstemperatur (T_{B}) der Wälzlageranordnung (1) und des Lagersitzes (20).

3. Verfahren nach Anspruch 1 oder 2, **dadurch gekennzeichnet, dass** das axiale Vorspannen der Außenringe (6A, 6B) zueinander mittels eines Druckfederelements (9), z.B. eines Wellfederrings, einer Tellerfeder oder einem elastisch deformierbaren Polymerelement, zwischen den Außenringen (6A, 6B) bewirkt wird.

4. Verfahren nach einem der vorangegangenen Ansprüche, **dadurch gekennzeichnet, dass** das axiale Vorspannen der Außenringe (6A, 6B) zueinander mittels eines Magnets (40) bewirkt wird, welcher wenigstens bis zur Ausbildung eines ausreichend festen Querpressverbands zwischen den Außenringen (6A, 6B) und dem Lagersitz (20) auf die Außenringe (6A, 6B) einwirkt.

5. Verfahren nach einem der vorangegangenen Ansprüche, **dadurch gekennzeichnet, dass** zur axialen Vorspannung die Außenringe (6A, 6B) aufeinander zu oder voneinander weg die Außenringe (6A, 6B) federnd oder magnetisch vorgespannt werden.

6. Verfahren nach einem der vorangegangenen Ansprüche, **dadurch gekennzeichnet, dass** die Welle (2) selbst Laufbahnen für Wälzkörper (5) besitzt und somit einen Innenring (4A, 4B) der Wälzlager (3A, 3B) bildet.

7. Verfahren nach einem der vorangegangenen Ansprüche, **dadurch gekennzeichnet, dass** als Wälzlager (3A, 3B) Rillenkugellager, Schulterkugellager, Schrägkugellager oder Kegelrollenlager verwendet werden.

8. Verfahren nach einem der vorangegangenen Ansprüche, **dadurch gekennzeichnet, dass** die Wälzlageranordnung (1) aus wenigstens zwei Wälzlagern (3A, 3B) gleicher Bauart oder wenigstens aus zwei Wälzlagern (3A, 3B) unterschiedlicher Bauart ausgebildet werden.

9. Pumpenvorrichtung, welche wenigstens eine bezüglich eines Gehäuses (21) drehbar gelagerte Welle (2) besitzt, wobei eine Wälzlageranordnung (1) der Welle (2) nach einem Verfahren nach einem der Ansprüche 1 bis 8 montiert ist.
